# EUROPEAN PATENT SPECIFICATION

(11) **EP 4 040 033 B1**
(45) Date of publication and mention of the grant of the patent: **25.06.2025**
(21) Application number: 20880474.0
(22) Date of filing: 27.07.2020
(51) Int. Cl.: F16M 13/02, F16B 2/08, H01Q 1/12

(54) **HOOP AND ELECTRONIC DEVICE**
REIFEN UND ELEKTRONISCHE VORRICHTUNG
ARCEAU ET DISPOSITIF ÉLECTRONIQUE

(30) Priority: 29.10.2019 CN 201911036924
(43) Date of publication of application: 10.08.2022
(73) Proprietor: Huawei Technologies Co., Ltd., Longgang District, Shenzhen, Guangdong 518129 (CN)
(72) Inventor: ZHAO, Yangyang, Shenzhen, Guangdong 518129 (CN); WANG, Bin, Shenzhen, Guangdong 518129 (CN); ZHOU, Yamin, Shenzhen, Guangdong 518129 (CN)
(74) Representative: Körber, Martin Hans
(86) International application number: PCT/CN2020/104865
(87) International publication number: WO 2021/082559

(56) References cited:
- CN-U- 207 261 385
- DE-A1- 3 607 359
- GB-A- 2 150 205
- IT-A1- TV20 120 060
- JP-A- 2019 113 134
- JP-A- 2019 128 427
- US-A1- 2006 191 113
- US-A1- 2018 194 270

## Description

### TECHNICAL FIELD

This application relates to the field of electronic device technologies, and in particular, to a hoop and an electronic device.

### BACKGROUND

At present, electronic devices such as a router, a camera, and an antenna may be fastened on existing rod bodies such as a railing, a fence, a downpipe, and a lamp post by using hoops.

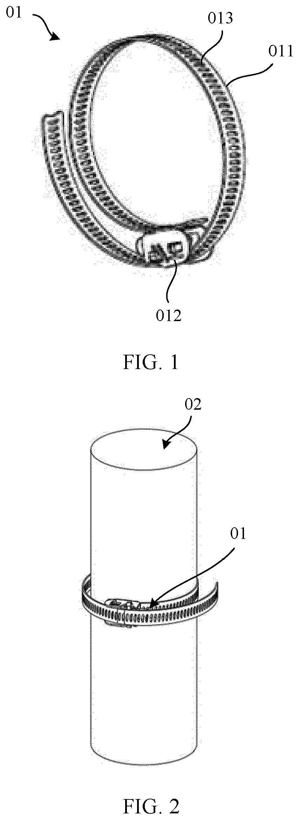

For example, FIG. 1 shows a hoop 01 in the conventional technology. As shown in FIG. 1, the hoop 01 includes a steel belt 011 and a steel belt buckle 012, the steel belt 011 is provided with a plurality of fastening holes 013 in a length direction, one end of the steel belt 011 is connected to the steel belt buckle 012, and the steel belt buckle 012 can be connected to any fastening hole 013. In this way, by fastening the steel belt buckle 012 to different fastening holes 013, the hoop 01 can be tightly held onto rod bodies 02 with a plurality of cross-sectional sizes (as shown in FIG. 2). However, because there is a specific spacing between two adjacent fastening holes 013, a scope of the rod bodies 02 to which the hoop 01 shown in FIG. 1 is applicable is still limited. The hoop 01 is not tightly held onto rod bodies of some diameters when being fastened on the rod bodies, resulting in a poor fastening effect.

IT TV20 120 060 A1 discloses a universal support device with elastic band, adjustable and removable, for fixing portable electronic equipment, in one case to the handlebar of a vehicle of the motor vehicle or bicycle type, or even in correspondence with a flat surface of a vehicle.

US 2018/194270 A1 discloses a spacer for spacing apart two attached articles, particularly for spacing apart bicycles from each other or other articles such as racks to protect the articles.

### SUMMARY

Embodiments of this application provide a hoop and an electronic device, to increase a scope of rod bodies to which the hoop is applicable.

To achieve the foregoing objective, the following technical solutions are used in embodiments of this application. The invention is defined in the independent claims. Advantageous features are defined in the dependent claims

According to a first aspect, an embodiment of this application provides a hoop, including a strap, a strap buckle, a support member, and a driving member. The strap is provided with a plurality of fastening holes in a length direction. The strap buckle includes a buckle head, a buckle body, and a buckle tail, the buckle head and the buckle tail are respectively located on two sides of the buckle body and are connected to the buckle body, the buckle tail is connected to one end of the strap, and the buckle head is capable of being fastened to any one of the fastening holes, so that the strap is held onto an existing rod body. The support member is located on a side that is of the buckle body and that is configured to face the existing rod body, the driving member is connected between the support member and the buckle body, and the driving member is configured to drive the support member to move in a direction close to or away from the buckle body.

In the hoop provided in this embodiment of this application, the hoop includes the strap and the strap buckle, the strap is provided with the plurality of fastening holes in the length direction, the strap buckle includes the buckle head, the buckle body, and the buckle tail, the buckle head and the buckle tail are respectively located on the two sides of the buckle body and are connected to the buckle body, the buckle tail is connected to one end of the strap, and the buckle head is capable of being fastened to any one of the fastening holes, so that the strap is held onto the existing rod body. In addition, the hoop includes the support member and the driving member, the support member is located on the side that is of the buckle body and that is configured to face the existing rod body, the driving member is connected between the support member and the buckle body, and the driving member is configured to drive the support member to move in the direction close to or away from the buckle body. Therefore, by fastening the buckle head to different fastening holes, the hoop can be directly held tightly onto rod bodies with a plurality of cross-sectional sizes defined by the plurality of fastening holes. When a cross-sectional size of a rod body is different from any one of the plurality of cross-sectional sizes, the strap may wind around the rod body, and the buckle head may be fastened to a fastening hole, so that the strap is held onto the rod body; and then the driving member drives the support member to move in the direction away from the buckle body to press the rod body, so that the strap is tightly held onto the rod body. In this way, the hoop can be tightly held onto the rod body with the cross-sectional size other than the plurality of cross-sectional sizes, thereby increasing a scope of rod bodies to which the hoop is applicable.

With reference to the first aspect, in a first optional implementation of the first aspect, the driving member is a hand torsion bar, and the hand torsion bar includes a hand torsion part, a screw rod part, and a connecting part that are successively connected in a length direction. The buckle body is provided with a threaded hole, the hand torsion part is located on a side that is of the buckle body and that is away from the support member, the screw rod part is screwed into the threaded hole, and the connecting part is connected to the support member. In this way, the hand torsion part can be operated to drive the support member to move in the direction close to or away from the buckle body. Such a driving member has a simple structure, a small footprint, and low costs.

With reference to the first optional implementation of the first aspect, in a second optional implementation of the first aspect, the connecting part is rotatably connected to the support member, and an axis of rotation between the connecting part and the support member is collinear with a central axis of the screw rod part. In this way, the support member is not fastened to the connecting part, and when the hand torsion bar is rotated to drive the support member to press the rod body, the support member is not rotated together with the hand torsion bar under the friction action of the rod body. This can avoid friction and wear between the support member and the rod body caused when the rod body is pressed.

With reference to the second optional implementation of the first aspect, in a third optional implementation of the first aspect, a limiting structure is disposed between the support member and the buckle body, and the limiting structure allows the support member to move in the direction close to or away from the buckle body and prevents the support member from rotating relative to the buckle body. In this way, when the hand torsion bar is rotated, the limiting structure can prevent the support member from rotating relative to the buckle body. This avoids friction between the support member and the rod body caused when the rod body is pressed.

With reference to the third optional implementation of the first aspect, in a fourth optional implementation of the first aspect, the limiting structure includes a square limiting hole and a limiting protrusion, one of the square limiting hole and the limiting protrusion is disposed on the buckle body, the other one of the square limiting hole and the limiting protrusion is disposed on the support member, an axial direction of the square limiting hole is the same as that of the screw rod part, the limiting protrusion is accommodated in the square limiting hole and is capable of sliding along the axial direction of the square limiting hole, the limiting protrusion has a first side surface and a second side surface, and the first side surface and the second side surface respectively fit in with two opposite inner walls of the square limiting hole. By making the limiting protrusion slide along the axial direction of the square limiting hole, the limiting structure allows the support member to move in the direction close to or away from the buckle body; and by making the two inner side surfaces of the square limiting hole fit in with the first side surface and the second side surface of the limiting protrusion, the limiting structure prevents the limiting protrusion from rotating in the square limiting hole, to prevent the support member from rotating relative to the buckle body. Such a limiting structure is simple and is easy to implement.

With reference to any one of the first aspect to the fourth optional implementation of the first aspect, in a fifth optional implementation of the first aspect, a strap hole is disposed on the buckle head, the strap hole allows the strap to pass through, a hook-up is disposed on an inner wall of the strap hole, and the fastening hole is capable of being hung on the hook-up. In this way, the strap passes through the strap hole, and the buckle head is fastened to the fastening hole by hanging the fastening hole on the hook-up. Such a structure is simple and is convenient to operate.

With reference to any one of the first aspect to the fifth optional implementation of the first aspect, in a sixth optional implementation of the first aspect, the hoop further includes an elastic pad. The elastic pad is disposed at least at an end that is of the support member and that is away from the buckle body. In this way, when the driving member drives the support member to move in the direction away from the buckle body to press the rod body, the elastic pad comes into contact with the rod body. This avoids compressive deformation of the rod body.

With reference to the sixth optional implementation of the first aspect, in a seventh optional implementation of the first aspect, a surface that is of the elastic pad and that is away from the buckle body is provided with an anti-slide structure. In this way, when the hoop in this embodiment of this application is tightly held onto the rod body, the anti-slide structure on the elastic pad comes into contact with the rod body. This can prevent the hoop from sliding down along the rod body.

With reference to the sixth or the seventh optional implementation of the first aspect, in an eighth optional implementation of the first aspect, the surface that is of the elastic pad and that is away from the buckle body is a first profiling surface, and the first profiling surface is adapted to a surface of the rod body. In this way, when the hoop in this embodiment of this application is tightly held onto the rod body, the first profiling surface fits in with the surface of the rod body, and a fitting area is large, so that a pressing force between the elastic pad and the rod body acts on a larger surface. This avoids compressive deformation of the rod body.

With reference to any one of the first aspect to the eighth optional implementation of the first aspect, in a ninth optional implementation of the first aspect, the hoop further includes at least one strap accommodation member, each strap accommodation member is provided with first through holes and second through holes, the first through holes and the second through holes are arranged side by side, the strap accommodation member is disposed, through the first through holes, on a part that is of the strap and that is configured to hold onto the existing rod body, and a part that is of the strap and that is not configured to hold onto the existing rod body is capable of being disposed through the second through holes. In this way, the strap accommodation member accommodates the part that is of the strap and that is not configured to hold onto the existing rod body, appearance neatness of the hoop that is present after the hoop is fastened on the rod body is ensured. In addition, the strap accommodation member can slide along the length direction of the strap, to adjust a location of the strap accommodation member, so that the strap accommodation member can accommodate parts of the strap that have different lengths and that are not configured to hold onto the existing rod body.

With reference to the ninth optional implementation of the first aspect, in a tenth optional implementation of the first aspect, a surface that is of the strap accommodation member and that is configured to fit in with the existing rod body is provided with an anti-slide structure. In this way, when the hoop in this embodiment of this application is tightly held onto the rod body, the anti-slide structure on the strap accommodation member comes into contact with the rod body. This can prevent the hoop from sliding down along the rod body.

With reference to the ninth or the tenth optional implementation of the first aspect, in an eleventh optional implementation of the first aspect, the surface that is of the strap accommodation member and that is configured to fit in with the existing rod body is a second profiling surface, and the second profiling surface is adapted to the surface of the rod body. In this way, when the hoop in this embodiment of this application is tightly held onto the rod body, the second profiling surface fits in with the surface of the rod body, and a fitting area is large, so that a pressing force between the strap accommodation member and the rod body acts on a larger surface. This avoids damage to the strap accommodation member and the rod body during mutual pressing.

With reference to the ninth, the tenth, or the eleventh optional implementation of the first aspect, in a twelfth optional implementation of the first aspect, a material of the strap accommodation member is silica gel. Silica gel has high toughness and can be prevented from being scratched by the strap when sliding along the strap.

With reference to any one of the first aspect to the twelfth optional implementation of the first aspect, in a thirteenth optional implementation of the first aspect, a thickness of the strap is 0.2 mm to 0.4 mm. In this way, a minimum bending radius of the strap is small, and the strap can be tightly held onto a rod body whose cross section is rectangular, triangular, prismatic, or the like.

With reference to any one of the first aspect to the thirteenth optional implementation of the first aspect, in a fourteenth optional implementation of the first aspect, a material of the strap is 316 stainless steel. 316 stainless steel has high tensile strength and is resistant to corrosion and a high temperature, and a lifespan of the strap is long.

According to a second aspect, an embodiment of this application provides an electronic device, including an electronic device body and the hoop according to any one of the foregoing technical solutions. A base of the electronic device body is provided with a third through hole, and the electronic device body is disposed on the strap through the third through hole.

Because the hoop used in the electronic device in this embodiment of this application is the same as the hoop according to the foregoing technical solutions, the two hoops can resolve a same technical problem and achieve a same expected effect.

With reference to the second aspect, in a first optional implementation of the second aspect, the electronic device body is an outdoor wireless router.

### BRIEF DESCRIPTION OF DRAWINGS

FIG. 1 is a schematic diagram of a structure of a hoop according to the conventional technology;
FIG. 2 is a schematic diagram of a structure when the hoop shown in FIG. 1 is held onto a rod body;
FIG. 3 is a schematic diagram of a structure of an electronic device according to an embodiment of this application;
FIG. 4 is a schematic diagram of a structure when an electronic device is held onto a rod body according to an embodiment of this application;
FIG. 5 is a three-dimensional diagram of a first type of hoop according to an embodiment of this application;
FIG. 6 is an exploded diagram of the hoop shown in FIG. 5;
FIG. 7 is a three-dimensional diagram of a strap buckle in the hoop shown in FIG. 5;
FIG. 8 is a cross-sectional view of an assembly structure of a buckle body, a support member, a driving member, and an elastic pad in the hoop shown in FIG. 5;
FIG. 9 is a three-dimensional diagram of a second type of hoop according to an embodiment of this application;
FIG. 10 is an exploded diagram of the hoop shown in FIG. 9;
FIG. 11 is a three-dimensional diagram of a strap buckle in the hoop shown in FIG. 9; and
FIG. 12 is a cross-sectional view of an assembly structure of a buckle body, a support member, a driving member, and an elastic pad in the hoop shown in FIG. 9.

### DESCRIPTION OF EMBODIMENTS

Electronic devices such as an outdoor wireless router and a road surveillance camera are widely deployed in outdoor scenarios to implement wireless sharing, traffic violation capture, and traffic flow monitoring within a specific range. Specifically, the electronic devices may be fastened on existing rod bodies in outdoor scenarios, to reduce deployment costs of the electronic devices. For example, the electronic devices may be fastened on existing rod bodies such as a lamp post, a railing, a fence, and a downpipe. To make weights of the existing rod bodies (for example, a railing and a fence) light, or to make fluid media capable of being transmitted or electrical connection cables capable of being deployed inside the existing rod bodies (for example, a downpipe and a lamp post), the existing rod bodies usually have hollow structures with small wall thicknesses. If the electronic devices are connected to the existing rod bodies by using threaded connectors (for example, a bolt and a screw), holes need to be drilled on the rod bodies. Consequently, liquid media in the rod bodies leak, and structural strength of the rod bodies is greatly reduced. In addition, because the wall thicknesses of the existing rod bodies are small, threaded fitting sizes between the threaded connectors and the existing rod bodies are small, and the electronic devices cannot be securely connected to the rod bodies. If the electronic devices are connected to the existing rod bodies through welding, heat generated during welding is prone to damage the electronic devices. Moreover, the electronic devices are in line contact with the existing rod bodies, a welding area is small, an operation is difficult, and welding strength is low.

To avoid the foregoing problems, an electronic device may be fastened on an existing rod body by using a hoop. The hoop includes a strap and a strap buckle, the strap is provided with a plurality of fastening holes along a length direction, one end of the strap is connected to the strap buckle, and the strap buckle is capable of being fastened to any one of the fastening holes, so that the strap is held onto an existing rod body. The electronic device is disposed on a part that is of the strap and that is held onto the existing rod body, so that the electronic device is fastened on the existing rod body. However, because there is a specific spacing between two adjacent fastening holes, a scope of rod bodies to which the hoop is applicable is limited. The hoop is not tightly held onto rod bodies of some diameters when being fastened on the rod bodies, resulting in a poor fastening effect.

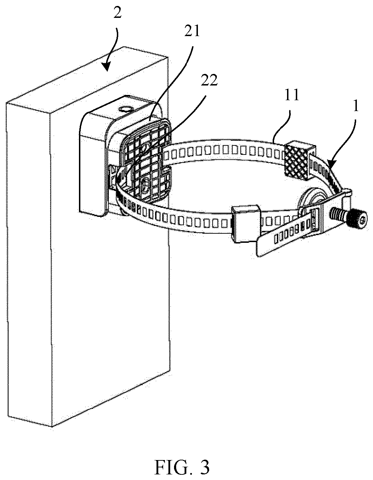

In view of this, some embodiments of this application provide an electronic device (as shown in FIG. 3), including an electronic device body 2 and a hoop 1. The electronic device body 2 includes but is not limited to an outdoor wireless router or a road surveillance camera. In some embodiments, as shown in FIG. 3, the electronic device body 2 is an outdoor wireless router.

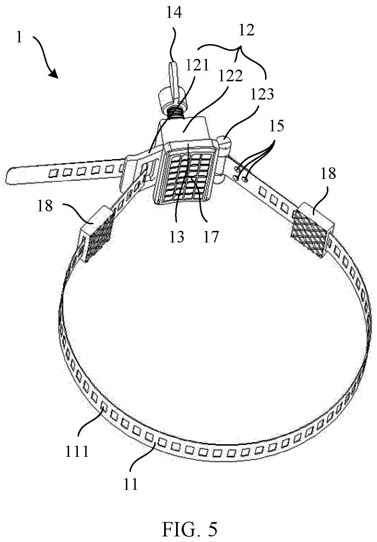

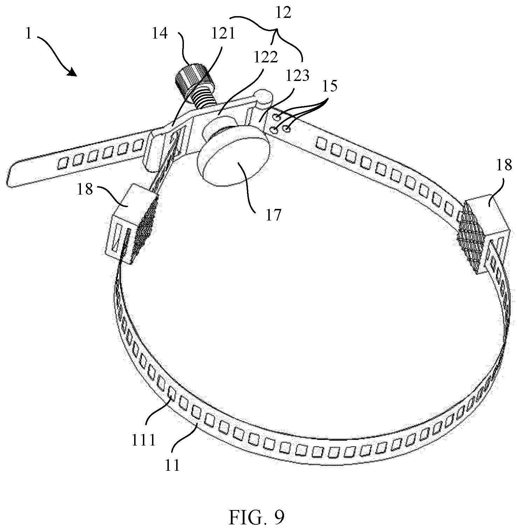

Some embodiments of this application provide a hoop 1 (as shown in FIG. 5 or FIG. 9). The hoop 1 includes a strap 11, a strap buckle 12, a support member 13, and a driving member 14. The strap 11 is provided with a plurality of fastening holes 111 in a length direction. The strap buckle 12 includes a buckle head 121, a buckle body 122, and a buckle tail 123, the buckle head 121 and the buckle tail 123 are respectively located on two sides of the buckle body 122 and are connected to the buckle body 122, the buckle tail 123 is connected to one end of the strap 11, and the buckle head 121 is capable of being fastened to any one of the fastening holes 111, so that the strap 11 is held onto an existing rod body. The support member 13 is located on a side that is of the buckle body 122 and that is configured to face the existing rod body, the driving member 14 is connected between the support member 13 and the buckle body 122, and the driving member 14 is configured to drive the support member 13 to move in a direction close to or away from the buckle body 122.

As shown in FIG. 3, the electronic device body 2 includes a base 21, the base 21 is provided with a third through hole 22, and the electronic device body 2 is disposed on the strap 11 of the hoop 1 through the third through hole 22.

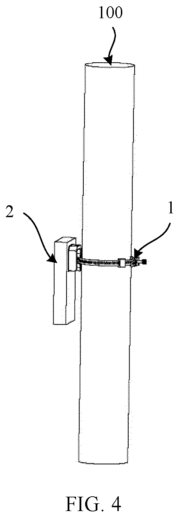

In the hoop provided in this embodiment of this application, as shown in FIG. 5 or FIG. 9, the hoop 1 includes the strap 11 and the strap buckle 12, the strap 11 is provided with the plurality of fastening holes 111 in the length direction, the strap buckle 12 includes the buckle head 121, the buckle body 122, and the buckle tail 123, the buckle head 121 and the buckle tail 123 are respectively located on the two sides of the buckle body 122 and are connected to the buckle body 122, the buckle tail 123 is connected to one end of the strap 11, and the buckle head 121 is capable of being fastened to any one of the fastening holes 111, so that the strap 11 is held onto the existing rod body. In addition, the hoop 1 includes the support member 13 and the driving member 14, the support member 13 is located on the side that is of the buckle body 122 and that is configured to face the existing rod body, the driving member 14 is connected between the support member 13 and the buckle body 122, and the driving member 14 is configured to drive the support member 13 to move in the direction close to or away from the buckle body 122. Therefore, by fastening the buckle head 121 to different fastening holes 111, the hoop 1 carrying the electronic device can be directly held tightly onto rod bodies 100 with a plurality of cross-sectional sizes defined by the plurality of fastening holes 111 (as shown in FIG. 4). When a cross-sectional size of a rod body is different from any one of the plurality of cross-sectional sizes, without changing a spacing between two adjacent fastening holes 111 on the strap 11, the buckle body 122 may be used as a reference after the strap 11 is held onto the rod body 100 by using the strap buckle 12. The driving member 14 drives the support member 13 to move in the direction away from the buckle body 122, so that the support member 13 presses the rod body 100, and the strap 11 is tightly held onto the rod body 100. In this way, the hoop 1 can be tightly held onto the rod body with the cross-sectional size other than the plurality of cross-sectional sizes, thereby increasing a scope of rod bodies to which the hoop 1 is applicable.

Because the hoop 1 used in the electronic device in this embodiment of this application is the same as the hoop 1 according to the foregoing technical solutions, the two hoops 1 can resolve a same technical problem and achieve a same expected effect.

In this embodiment of this application, a maximum travel of the driving member 14 for driving the support member 13 to move may be 1 mm, 2 mm, 3 mm, or the like. This is not specifically limited herein. In some embodiments, the maximum travel of the driving member 14 for driving the support member 13 to move needs to be greater than or equal to a distance between any two adjacent fastening holes on the strap 11. In this way, the hoop 1 can be tightly held onto a rod body with a cross-sectional size between two cross-sectional sizes defined by any two adjacent fastening holes on the strap 11, thereby increasing a scope of rod bodies to which the hoop provided in this embodiment of this application is applicable.

A material of the strap 11 includes but is not limited to metal, plastic, or gauze. In some embodiments, the material of the strap 11 is 316 stainless steel. 316 stainless steel has high tensile strength and is resistant to corrosion and a high temperature, and a lifespan of the strap 11 can be prolonged.

A thickness of the strap 11 includes but is not limited to 1.2 mm, 1.0 mm, 0.8 mm, or 0.6 mm. In some embodiments, the thickness of the strap 11 is 0.2 mm to 0.4 mm. In this way, the thickness of the strap 11 is small, a minimum bending radius of the strap 11 is small, and the strap 11 can be tightly held onto a rod body whose cross section is rectangular, triangular, prismatic, or the like.

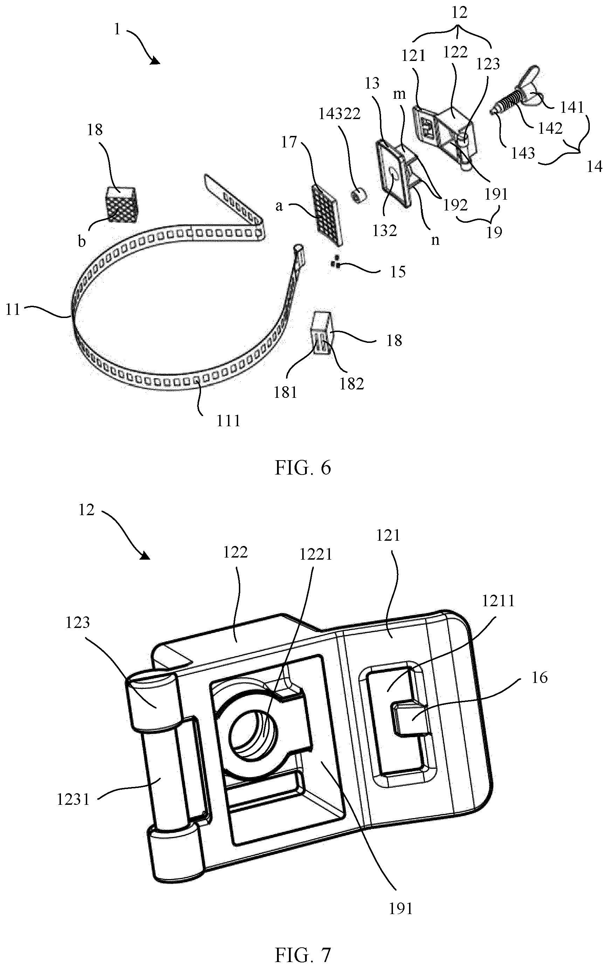

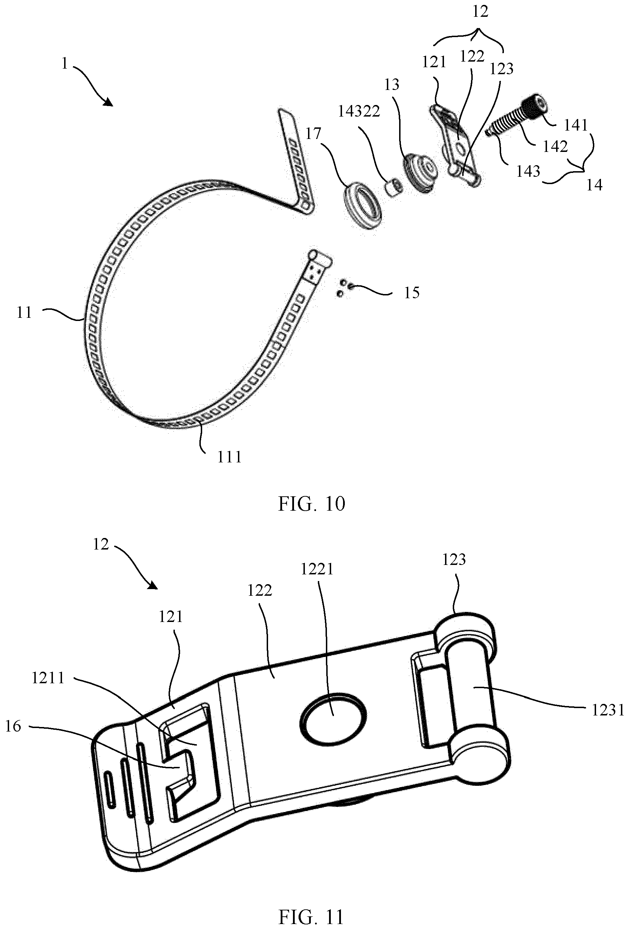

The buckle tail 123 may be connected to one end of the strap 11 through welding, riveting, or the like. This is not specifically limited herein. In some embodiments, as shown in FIG. 7 or FIG. 11, the buckle tail 123 includes a rotating shaft 1231, and two ends of the rotating shaft 1231 are connected to the buckle body 122. As shown in FIG. 5 or FIG. 9, one end of the strap 11 winds around the rotating shaft 1231 and is then bent reversely, and is fixedly connected to a part that is of the strap 11 and that does not wind around the rotating shaft 1231, so that the strap 11 can rotate around the rotating shaft 1231. This facilitates adjustment of an angle of the strap 11 relative to the strap buckle 12, so that the strap 11 fits in with a surface of the to-be-held rod body, so as to be tightly held onto the to-be-held rod body. In some embodiments, the part that is of the strap 11 and that winds around the rotating shaft 1231 and the part that is of the strap 11 and that does not wind around the rotating shaft 1231 are fixedly connected to each other by using at least one rivet 15. Surface flatness that is present after riveting is performed by using the rivet 15 is desirable, and no sharp protrusion appears. Therefore, the to-be-held rod body or installation personnel are not scratched.

A shape of the support member 13 includes but is not limited to a plate shape, a block shape, or a disk shape. In some embodiments, as shown in FIG. 6, the shape of the support member 13 is a plate shape. In some other embodiments, as shown in FIG. 10, the shape of the support member 13 is a disk shape.

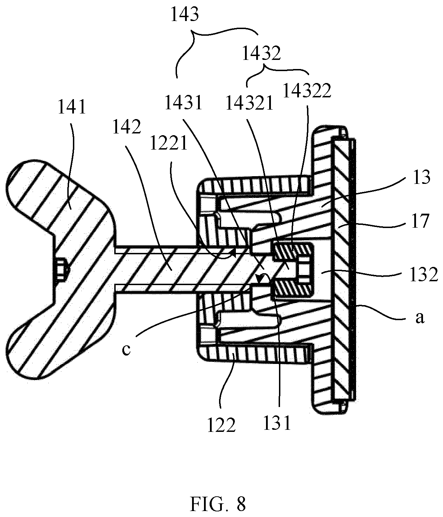

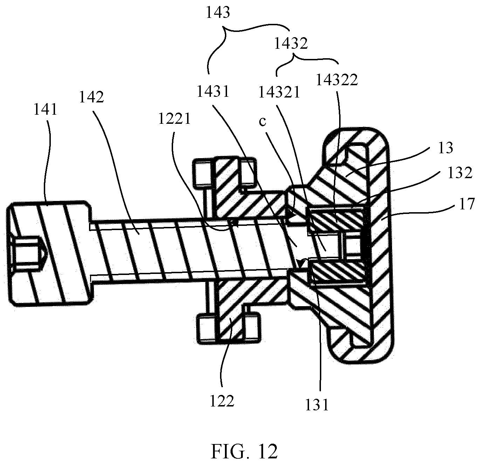

The driving member 14 includes but is not limited to a linear actuator, a hydraulic cylinder, or a screw rod. In some embodiments, as shown in FIG. 6 or FIG. 10, the driving member 14 is a hand torsion bar, and the hand torsion bar includes a hand torsion part 141, a screw rod part 142, and a connecting part 143 that are successively connected in a length direction. As shown in FIG. 7 or FIG. 11, the buckle body 122 is provided with a threaded hole 1221. As shown in FIG. 8 or FIG. 12, the hand torsion part 141 is located on a side that is of the buckle body 122 and that is away from the support member 13, the screw rod part 142 is screwed into the threaded hole 1221, and the connecting part 143 is connected to the support member 13. In this way, the hand torsion part 141 can be operated to drive the support member 13 to move in the direction close to or away from the buckle body 122. Such a driving member 14 has a simple structure, a small footprint, and low costs.

The connecting part 143 may be fixedly or rotatably connected to the support member 13. This is not specifically limited herein. In some embodiments, as shown in FIG. 8 or FIG. 12, the connecting part 143 may be rotatably connected to the support member 13, and an axis of rotation between the connecting part 143 and the support member 13 is collinear with a central axis of the screw rod part 142. In this way, the support member 13 is not fastened to the connecting part 143, and when the hand torsion bar is rotated to drive the support member 13 to press the rod body, the support member 13 is not rotated together with the hand torsion bar under the friction action of the rod body. This can avoid friction and wear between the support member 13 and the rod body caused when the rod body is pressed.

To implement the rotatable connection between the connecting part 143 and the support member 13, in some embodiments, as shown in FIG. 8 or FIG. 12, the connecting part 143 includes a rotating shaft 1431 and a stopping structure 1432, one end of the rotating shaft 1431 is fastened to the screw rod part 142, a central axis of the rotating shaft 1431 is collinear with the central axis of the screw rod part 142, a diameter of the rotating shaft 1431 is less than a diameter of the screw rod part 142, and a shaft shoulder c is formed between the rotating shaft 1431 and the screw rod part 142; and the support member 13 is provided with a connecting hole 131, the support member 13 is disposed on the rotating shaft 1431 through the connecting hole 131, the shaft shoulder c stops at one side of the support member 13, the stopping structure 1432 is connected to the other end of the rotating shaft 1431, and the stopping structure 1432 stops at the other side of the support member 13. Such a structure is simple and is easy to implement.

In some embodiments, as shown in FIG. 8 or FIG. 12, a location, corresponding to the connecting hole 131, of a surface that is of the support member 13 and that is away from the buckle body 122 is provided with a sinking groove 132, and the stopping structure 1432 is located in the sinking groove 132. In this way, the stopping structure 1432 does not protrude from the surface that is of the support member 13 and that is away from the buckle body 122, the stopping structure 1432 is not in contact with the rod body, and the stopping structure 1432 does not damage the rod body when rotating together with the screw rod part 142.

In some embodiments, as shown in FIG. 8 or FIG. 12, the stopping structure 1432 includes a screw rod 14321 and a nut 14322, the screw rod 14321 is connected to the rotating shaft 1431, and the nut 14322 is screwed onto the screw rod 14321.

In some embodiments, as shown in FIG. 6, a limiting structure 19 is disposed between the support member 13 and the buckle body 122, and the limiting structure 19 allows the support member 13 to move in the direction close to or away from the buckle body 122 and prevents the support member 13 from rotating relative to the buckle body 122. In this way, when the hand torsion bar is rotated, the limiting structure 19 can prevent the support member 13 from rotating relative to the buckle body 122. This avoids friction between the support member 13 and the rod body caused when the rod body is pressed.

There are a plurality of structural forms for the limiting structure 19. This is not specifically limited herein. In some embodiments, as shown in FIG. 6, the limiting structure 19 includes a square limiting hole 191 and a limiting protrusion 192, one of the square limiting hole 191 and the limiting protrusion 192 is disposed on the buckle body 122, the other one of the square limiting hole 191 and the limiting protrusion 192 is disposed on the support member 13, an axial direction of the square limiting hole 191 is the same as that of the screw rod part 142, the limiting protrusion 192 is accommodated in the square limiting hole 191 and is capable of sliding along the axial direction of the square limiting hole 191, the limiting protrusion 192 has a first side surface m and a second side surface n, and the first side surface m and the second side surface n respectively fit in with two opposite inner walls of the square limiting hole 191. By making the limiting protrusion 192 slide along the axial direction of the square limiting hole 191, the limiting structure 19 allows the support member 13 to move in the direction close to or away from the buckle body 122; and by making the two inner side surfaces of the square limiting hole 191 fit in with the first side surface m and the second side surface n of the limiting protrusion 192, the limiting structure 19 prevents the limiting protrusion 192 from rotating in the square limiting hole 191, to prevent the support member 13 from rotating relative to the buckle body 122. Such a limiting structure 19 is simple and is easy to implement.

To fasten the buckle head 121 to the fastening hole 111, in some embodiments, as shown in FIG. 7 or FIG. 11, a strap hole 1211 is disposed on the buckle head 121, the strap hole 1211 allows the strap 11 to pass through, a hook-up 16 is disposed on an inner wall of the strap hole 1211, and the fastening hole 111 is capable of being hung on the hook-up 16. In this way, the strap 11 passes through the strap hole 1211, and the buckle head 121 is fastened to the fastening hole 111 by hanging the fastening hole 111 on the hook-up 16. Such a structure is simple and is convenient to operate.

In the foregoing embodiment, the hook-up 16 may be disposed on an inner wall of one end that is of the strap hole 1211 and that is away from the buckle body 122, may be disposed on an inner wall of one end that is of the strap hole 1211 and that is close to the buckle body 122, or may be disposed on inner walls of the other two ends of the strap hole 1211. This is not specifically limited herein. In some embodiments, as shown in FIG. 7 or FIG. 11, the hook-up 16 is disposed on the inner wall of one end that is of the strap hole 1211 and that is away from the buckle body 122. In this way, after the strap 11 passes through the strap hole 1211 and the fastening hole 111 is hung on the hook-up 16, the strap 11 is bent reversely, to prevent the fastening hole 111 from being released from the hook-up 16. This enables a convenient operation and desirable appearance neatness.

A material of the support member 13 includes but is not limited to metal, plastic, silica gel, or rubber. The support member 13 may be entirely made of a rigid material, or may be entirely made of an elastic material, or may be partially made of a rigid material and partially made of an elastic material. This is not specifically limited herein.

In some embodiments, as shown in FIG. 6 or FIG. 10, the hoop 1 further includes an elastic pad 17. The elastic pad 17 is disposed at least at an end that is of the support member 13 and that is away from the buckle body 122. In this way, when the driving member 14 drives the support member 13 to move in the direction away from the buckle body 122 to press the rod body, the elastic pad 17 comes into contact with the rod body. This avoids compressive deformation of the rod body.

In the foregoing embodiment, that the elastic pad 17 is disposed at least at an end that is of the support member 13 and that is away from the buckle body 122 means: The elastic pad 17 may be disposed only at the end that is of the support member 13 and that is away from the buckle body 122, or may be disposed at the end that is of the support member 13 and that is away from the buckle body 122 and disposed at another part of the support member 13. This is not specifically limited herein. In some embodiments, as shown in FIG. 8, the elastic pad 17 is disposed only at the end that is of the support member 13 and that is away from the buckle body 122. In some other embodiments, as shown in FIG. 12, the elastic pad 17 is disposed at the end that is of the support member 13 and that is away from the buckle body 122 and disposed on a side surface of the support member 13. That the elastic pad 17 is disposed at the end that is of the support member 13 and that is away from the buckle body 122 specifically means: The elastic pad 17 may cover an entire end surface of the end that is of the support member 13 and that is away from the buckle body 122 (as shown in FIG. 8 or FIG. 12), or cover only a partial end face of the end that is of the support member 13 and that is away from the buckle body 122. For example, the elastic pad 17 covers only an edge region of the end face of the end that is of the support member 13 and that is away from the buckle body 122. This is not specifically limited herein.

In some embodiments, as shown in FIG. 6, a surface that is of the elastic pad 17 and that is away from the buckle body 122 is provided with an anti-slide structure a. In this way, when the hoop 1 in this embodiment of this application is tightly held onto the rod body, the anti-slide structure a on the elastic pad 17 comes into contact with the rod body. This can prevent the hoop 1 from sliding down along the rod body.

There are a plurality of structural forms for the anti-slide structure a. This is not specifically limited herein. In some embodiments, as shown in FIG. 6, the anti-slide structure a is a plurality of ribs uniformly disposed on the surface that is of the elastic pad 17 and that is away from the buckle body 122, and the plurality of ribs are arranged intersecting each other.

In some embodiments, the surface that is of the elastic pad 17 and that is away from the buckle body 122 is a first profiling surface, and the first profiling surface is adapted to the surface of the rod body. In this way, when the hoop 1 in this embodiment of this application is tightly held onto the rod body, the first profiling surface fits in with the surface of the rod body, and a fitting area is large, so that a pressing force between the elastic pad 17 and the rod body acts on a larger surface. This avoids compressive deformation of the rod body.

In some embodiments, as shown in FIG. 5 or FIG. 9, the hoop 1 further includes at least one strap accommodation member 18. As shown in FIG. 6, each strap accommodation member 18 is provided with first through holes 181 and second through holes 182, the strap accommodation member 18 is disposed, through the first through holes 181, on a part that is of the strap 11 and that is configured to hold onto the existing rod body, and a part that is of the strap 11 and that is not configured to hold onto the existing rod body is capable of being disposed through the second through holes 182. In this way, the strap accommodation member 18 accommodates the part that is of the strap 11 and that is not configured to hold onto the existing rod body, appearance neatness of the hoop 1 that is present after the hoop 1 is fastened on the rod body is ensured. In addition, the strap accommodation member 18 can slide along the length direction of the strap 11, to adjust a location of the strap accommodation member 18, so that the strap accommodation member 18 can accommodate parts of the strap that have different lengths and that are not configured to hold onto the existing rod body.

There may be one, two, three, or more strap accommodation members 18. This is not specifically limited herein. In some embodiments, as shown in FIG. 5 or FIG. 9, there are two strap accommodation members 18. In this way, the strap accommodation members 18 can accommodate parts of the strap that have a large length and that are not configured to hold onto the existing rod body, and the quantity of the strap accommodation members 18 is relatively small, so that structural complexity and costs of the hoop 1 can be reduced.

The first through holes 181 and the second through holes 182 may be arranged side by side (that is, an axial direction of the first through holes 181 and an axial direction of the second through holes 182 are parallel to each other), may be perpendicular to each other (that is, the axial direction of the first through holes 181 and the axial direction of the second through holes 182 are perpendicular to each other), or may be in another orientation relationship. This is not specifically limited herein. In some embodiments, as shown in FIG. 6, the first through holes 181 and the second through holes 182 are arranged side by side, and the first through holes 181 and the second through holes 182 are arranged along a thickness direction of the strap 11. In this way, when the strap 11 winds around the rod body, the buckle head 121 is fastened to a fastening hole 111 so that the strap 11 is held onto the rod body, and the part that is of the strap 11 and that is not configured to hold onto the existing rod body is disposed through the second through holes 182, the part that is of the strap 11 and that is not configured to hold onto the existing rod body partially overlaps the part that is of the strap 11 and that is held onto the rod body. This enables desirable appearance neatness.

The first through holes 181 and the second through holes 182 may be independent of each other, or may penetrate through each other. This is not specifically limited herein. In some embodiments, as shown in FIG. 6, the first through holes 181 and the second through holes 182 are independent of each other, to avoid friction between the part that is of the strap 11 and that is disposed through the first through holes 181 and the part that is of the strap 11 and that is disposed through the second through holes 182. In some other embodiments, the first through holes 181 and the second through holes 182 penetrate through each other. In this way, only one through hole needs to be formed on the strap accommodation member 18. Therefore, the strap accommodation member 18 has a simple structure and is easy to fabricate.

In some embodiments, as shown in FIG. 6, a surface that is of the strap accommodation member 18 and that is configured to fit in with the existing rod body is provided with an anti-slide structure b. In this way, when the hoop 1 in this embodiment of this application is tightly held onto the rod body, the anti-slide structure b on the strap accommodation member 18 comes into contact with the rod body. This can prevent the hoop 1 from sliding down along the rod body.

There are a plurality of structural forms for the anti-slide structure b. This is not specifically limited herein. In some embodiments, as shown in FIG. 6, the anti-slide structure b is a plurality of ribs uniformly disposed on the inner surface of the strap accommodation member 18, and the plurality of ribs are arranged intersecting each other.

In some embodiments, the surface that is of the strap accommodation member 18 and that is configured to fit in with the existing rod body is a second profiling surface, and the second profiling surface is adapted to the surface of the rod body. In this way, when the hoop 1 in this embodiment of this application is tightly held onto the rod body, the second profiling surface fits in with the surface of the rod body, and a fitting area is large, so that a pressing force between the strap accommodation member 18 and the rod body acts on a larger surface. This avoids damage to the strap accommodation member 18 and the rod body during mutual pressing

A material of the strap accommodation member 18 includes but is not limited to plastic, silica gel, rubber, or metal. In some embodiments, the material of the strap accommodation member 18 is silica gel. Silica gel has high toughness and can be prevented from being scratched by the strap 11 when sliding along the strap 11.

In some embodiments, the electronic device body is provided with a third through hole, and the electronic device body is disposed on the strap 11 through the third through hole. In this way, the electronic device body may slide along the strap 11, to adjust a location of the electronic device body on the strap 11.

In the descriptions of this specification, the specific features, structures, materials, or characteristics may be combined in a proper manner in any one or more of embodiments or examples.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application as defined in the appended claims.

## Claims

1. A hoop (1), comprising a strap (11), a strap buckle (12), a support member (13), and a driving member (14), wherein
the strap (11) is provided with a plurality of fastening holes (111) in a length direction;
the strap buckle (12) comprises a buckle head (121), a buckle body (122), and a buckle tail (123), the buckle head (121) and the buckle tail (123) are respectively located on two sides of the buckle body (122) and are connected to the buckle body (122), the buckle tail (123) is connected to one end of the strap (11), and the buckle head (121) is capable of being fastened to any one of the fastening holes (111), so that the strap (11) can be held, in use, onto an existing rod body (100); and
the support member (13) is located on a side that is of the buckle body (122) facing in use the existing rod body (100),
**characterized in that** the driving member (14) is connected between the support member (13) and the buckle body (122), and the driving member (14) is configured to drive the support member (13) to move in a direction close to or away from the buckle body (122).

2. The hoop according to claim 1, wherein the driving member (14) is a hand torsion bar, and the hand torsion bar comprises a hand torsion part (141), a screw rod part (142), and a connecting part (143) that are successively connected in a length direction; and
the buckle body (122) is provided with a threaded hole (1221), the hand torsion part (141) is located on a side that is of the buckle body (122) and that is away from the support member (13), the screw rod part (142) is screwed into the threaded hole (1221), and the connecting part (143) is connected to the support member (13).

3. The hoop according to claim 2, wherein the connecting part (143) is rotatably connected to the support member (13), and an axis of rotation between the connecting part (143) and the support member (13) is collinear with a central axis of the screw rod part (142).

4. The hoop according to claim 3, wherein a limiting structure (19) is disposed between the support member (13) and the buckle body (122), and the limiting structure (19) allows the support member (13) to move in the direction close to or away from the buckle body (122) and prevents the support member (13) from rotating relative to the buckle body (122).

5. The hoop according to claim 4, wherein the limiting structure (19) comprises a square limiting hole (191) and a limiting protrusion (192), one of the square limiting hole (191) and the limiting protrusion (192) is disposed on the buckle body (122), the other one of the square limiting hole (191) and the limiting protrusion (192) is disposed on the support member (13), an axial direction of the square limiting hole (191) is the same as that of the screw rod part (142), the limiting protrusion (192) is accommodated in the square limiting hole (191) and is capable of sliding along the axial direction of the square limiting hole (191), the limiting protrusion (192) has a first side surface (m) and a second side surface (n), and the first side surface (m) and the second side surface (n) respectively fit in with two opposite inner walls of the square limiting hole (191).

6. The hoop according to any one of claims 1 to 5, wherein a strap hole (1211) is disposed on the buckle head (121), the strap hole (1211) allows the strap (11) to pass through, a hook-up (16) is disposed on an inner wall of the strap hole (1211), and the fastening hole (111) is capable of being hung on the hook-up (16).

7. The hoop according to any one of claims 1 to 6, further comprising an elastic pad (17), wherein the elastic pad (17) is disposed at least at an end that is of the support member (13) and that is away from the buckle body (122).

8. The hoop according to claim 7, wherein a surface that is of the elastic pad (17) and that is away from the buckle body (122) is provided with an anti-slide structure.

9. The hoop according to any one of claims 1 to 8, further comprising at least one strap accommodation member (18), each strap accommodation member (18) is provided with first through holes (181) and second through holes (182), the first through holes (181) and the second through holes (182) are arranged side by side, the strap accommodation member (18) is disposed, through the first through holes (181), on a part that is of the strap (11) and that is configured to hold onto the existing rod body (100), and a part that is of the strap (11) and that is not configured to hold onto the existing rod body (100) is capable of being disposed through the second through holes (182).

10. The hoop according to claim 9, wherein a surface that is of the strap accommodation member (18) and that is configured to fit in with the existing rod body (100) is provided with an anti-slide structure.

11. The hoop according to any one of claims 1 to 10, wherein a thickness of the strap (11) is 0.2 mm to 0.4 mm.

12. An electronic device, comprising an electronic device body (2) and the hoop (1) according to any one of claims 1 to 11, wherein a base (21) of the electronic device body (2) is provided with a third through hole (22), and the electronic device body (2) is disposed on the strap (11) through the third through hole (22).

13. The electronic device according to claim 12, wherein the electronic device body (2) is an outdoor wireless router.

## Patentansprüche

1. Reifen (1), umfassend einen Riemen (11), eine Riemenschnalle (12), ein Stützelement (13) und ein Antriebselement (14), wobei
der Riemen (11) in einer Längsrichtung mit einer Vielzahl von Befestigungslöchern (111) bereitgestellt ist;
die Riemenschnalle (12) einen Schnallenkopf (121), einen Schnallenkörper (122) und ein Schnallenende (123) umfasst, sich der Schnallenkopf (121) und das Schnallenende (123) jeweils auf zwei Seiten des Schnallenkörpers (122) befinden und mit dem Schnallenkörper (122) verbunden sind, das Schnallenende (123) mit einem Ende des Riemens (11) verbunden ist und der Schnallenkopf (121) dazu fähig ist, an einem beliebigen der Befestigungslöcher (111) befestigt zu werden, sodass der Riemen (11) bei Gebrauch an einem vorhandenen Stangenkörper (100) festgehalten werden kann;
und
sich das Stützelement (13) auf einer Seite befindet, die dem Schnallenkörper (122) angehört und bei Gebrauch dem vorhandenen Stangenkörper (100) zugewandt ist,
**dadurch gekennzeichnet, dass** das
Antriebselement (14) zwischen dem Stützelement (13) und dem Schnallenkörper (122) verbunden ist und das Antriebselement (14) dazu konfiguriert ist, das Stützelement (13) dazu anzutreiben, sich in eine Richtung nahe dem Schnallenkörper (122) oder von diesem weg zu bewegen.

2. Reifen nach Anspruch 1, wobei das Antriebselement (14) ein Handtorsionsstab ist und der Handtorsionsstab einen Handtorsionsteil (141), einen Schraubenstangenteil (142) und einen Verbindungsteil (143) umfasst, die in einer Längsrichtung sukzessive verbunden sind; und
der Schnallenkörper (122) mit einem Gewindeloch (1221) bereitgestellt ist, sich der Handtorsionsteil (141) auf einer Seite befindet, die dem Schnallenkörper (122) angehört und die von dem Stützelement (13) weg ist, der Schraubenstangenteil (142) in das Gewindeloch (1221) eingeschraubt ist und der Verbindungsteil (143) mit dem Stützelement (13) verbunden ist.

3. Reifen nach Anspruch 2, wobei der Verbindungsteil (143) drehbar mit dem Stützelement (13) verbunden ist und eine Drehachse zwischen dem Verbindungsteil (143) und dem Stützelement (13) kollinear mit einer Mittelachse des Schraubenstangenteils (142) ist.

4. Reifen nach Anspruch 3, wobei eine Begrenzungsstruktur (19) zwischen dem Stützelement (13) und dem Schnallenkörper (122) angeordnet ist und die Begrenzungsstruktur (19) es dem Stützelement (13) ermöglicht, sich in die Richtung nahe dem Schnallenkörper (122) oder von diesem weg zu bewegen, und verhindert, dass sich das Stützelement (13) in Bezug auf den Schnallenkörper (122) dreht.

5. Reifen nach Anspruch 4, wobei die Begrenzungsstruktur (19) ein quadratisches Begrenzungsloch (191) und einen Begrenzungsvorsprung (192) umfasst, eines des quadratischen Begrenzungslochs (191) und des Begrenzungsvorsprungs (192) auf dem Schnallenkörper (122) angeordnet ist, das andere des quadratischen Begrenzungslochs (191) und des Begrenzungsvorsprungs (192) auf dem Stützelement (13) angeordnet ist, eine axiale Richtung des quadratischen Begrenzungslochs (191) die gleiche wie jene des Schraubenstangenteils (142) ist, der Begrenzungsvorsprung (192) in dem quadratischen Begrenzungsloch (191) aufgenommen ist und dazu fähig ist, entlang der axialen Richtung des quadratischen Begrenzungslochs (191) zu gleiten, der Begrenzungsvorsprung (192) eine erste Seitenfläche (m) und eine zweite Seitenfläche (n) aufweist und die erste Seitenfläche (m) und die zweite Seitenfläche (n) jeweils zu zwei gegenüberliegenden Innenwänden des quadratischen Begrenzungslochs (191) passen.

6. Reifen nach einem der Ansprüche 1 bis 5, wobei ein Riemenloch (1211) auf dem Schnallenkopf (121) angeordnet ist, das Riemenloch (1211) es dem Riemen (11) ermöglicht, hindurchzugehen, ein Haken (16) auf einer Innenwand des Riemenlochs (1211) angeordnet ist und das Befestigungsloch (111) dazu fähig ist, an den Haken (16) gehängt zu werden.

7. Reifen nach einem der Ansprüche 1 bis 6, ferner umfassend ein elastisches Polster (17), wobei das elastische Polster (17) mindestens an einem Ende angeordnet ist, das dem Stützelement (13) angehört und das von dem Schnallenkörper (122) weg ist.

8. Reifen nach Anspruch 7, wobei eine Oberfläche, die dem elastischen Polster (17) angehört und die von dem Schnallenkörper (122) weg ist, mit einer Antirutschstruktur bereitgestellt ist.

9. Reifen nach einem der Ansprüche 1 bis 8, ferner umfassend mindestens ein Riemenaufnahmeelement (18), wobei jedes Riemenaufnahmeelement (18) mit ersten Durchgangslöchern (181) und zweiten Durchgangslöchern (182) bereitgestellt ist, die ersten Durchgangslöcher (181) und die zweiten Durchgangslöcher (182) nebeneinander angeordnet sind, das Riemenaufnahmeelement (18) durch die ersten Durchgangslöcher (181) hindurch auf einem Teil angeordnet ist, der dem Riemen (11) angehört und der dazu konfiguriert ist, sich an dem vorhandenen Stangenkörper (100) festzuhalten, und ein Teil, der dem Riemen (11) angehört und der nicht dazu konfiguriert ist, sich an dem vorhandenen Stangenkörper (100) festzuhalten, dazu fähig ist, durch die zweiten Durchgangslöcher (182) hindurch angeordnet zu sein.

10. Reifen nach Anspruch 9, wobei eine Oberfläche, die dem Riemenaufnahmeelement (18) angehört und die dazu konfiguriert ist, zu dem vorhandenen Stangenkörper (100) zu passen, mit einer Antirutschstruktur bereitgestellt ist.

11. Reifen nach einem der Ansprüche 1 bis 10, wobei eine Dicke des Riemens (11) 0,2 mm bis 0,4 mm beträgt.

12. Elektronische Vorrichtung, umfassend einen elektronischen Vorrichtungskörper (2) und den Riemen (1) nach einem der Ansprüche 1 bis 11, wobei eine Basis (21) des elektronischen Vorrichtungskörpers (2) mit einem dritten Durchgangsloch (22) bereitgestellt ist und der elektronische Vorrichtungskörper (2) auf dem Riemen (11) durch das dritte Durchgangsloch (22) hindurch angeordnet ist.

13. Elektronische Vorrichtung nach Anspruch 12, wobei der elektronische Vorrichtungskörper (2) ein drahtloser Outdoor-Router ist.

## Revendications

1. Arceau (1), comprenant une sangle (11), une boucle de sangle (12), un élément de support (13) et un élément d'entraînement (14), dans lequel
la sangle (11) est pourvue d'une pluralité de trous de fixation (111) dans la direction de longueur ;
la boucle de sangle (12) comprend une tête de boucle (121), un corps de boucle (122) et une queue de boucle (123), la tête de boucle (121) et la queue de boucle (123) sont respectivement situées sur deux côtés du corps de boucle (122) et sont reliées au corps de boucle (122), la queue de boucle (123) est reliée à une extrémité de la sangle (11), et la tête de boucle (121) est capable d'être fixée à l'un quelconque des trous de fixation (111), de sorte que la sangle (11) peut être maintenue, lors de son utilisation, sur un corps de tige existant (100) ;
et
l'élément de support (13) est situé sur un côté du corps de boucle (122) faisant face lors de son utilisation au corps de tige existant (100),
**caractérisé en ce que** l'élément d'entraînement (14) est relié entre l'élément de support (13) et le corps de boucle (122), et l'élément d'entraînement (14) est configuré pour entraîner l'élément de support (13) à se déplacer dans une direction proche ou éloignée du corps de boucle (122).

2. Arceau selon la revendication 1, dans lequel l'élément d'entraînement (14) est une barre de torsion manuelle, et la barre de torsion manuelle comprend une partie de torsion manuelle (141), une partie de tige de vis (142) et une partie de liaison (143) qui sont successivement reliées dans une direction de longueur ; et
le corps de boucle (122) est pourvu d'un trou fileté (1221), la partie de torsion manuelle (141) est située sur un côté du corps de boucle (122) et qui est éloigné de l'élément de support (13), la partie de tige de vis (142) est vissée dans le trou fileté (1221), et la partie de liaison (143) est reliée à l'élément de support (13).

3. Arceau selon la revendication 2, dans lequel la partie de liaison (143) est reliée de manière rotative à l'élément de support (13), et un axe de rotation entre la partie de liaison (143) et l'élément de support (13) est colinéaire avec un axe central de la partie de tige de vis (142).

4. Arceau selon la revendication 3, dans lequel une structure de limitation (19) est disposée entre l'élément de support (13) et le corps de boucle (122), et la structure de limitation (19) permet à l'élément de support (13) de se déplacer dans la direction proche ou éloignée du corps de boucle (122) et empêche **l'élément** de support (13) de tourner par rapport au corps de boucle (122).

5. Arceau selon la revendication **4,** dans lequel la structure de limitation (19) comprend un trou de limitation carré (191) et une saillie de limitation (192), l'un du trou de limitation carré (191) et de la saillie de limitation (192) est disposé sur le corps de boucle (122), l'autre du trou de limitation carré (191) et de la saillie de limitation (192) est disposé sur **l'élément** de support (13), une direction axiale du trou de limitation carré (191) est la même que celle de la partie de tige de vis (142), la saillie de limitation (192) est logée dans le trou de limitation carré (191) et est capable de coulisser le long de la direction axiale du trou de limitation carré (191), la saillie de limitation (192) a une première surface latérale (m) et une seconde surface latérale (n), et la première surface latérale (m) et la seconde surface latérale (n) **s'adaptent** respectivement à deux parois intérieures opposées du carré trou de limitation (191).

6. Arceau selon l'une quelconque des revendications 1 à 5, dans lequel un trou de sangle (1211) est disposé sur la tête de boucle (121), le trou de sangle (1211) permet à la sangle (11) de passer à travers, un crochet (16) est disposé sur une paroi intérieure du trou de sangle (1211), et le trou de fixation (111) est capable d'être accroché sur le crochet (16).

7. Arceau selon l'une quelconque des revendications 1 à 6, comprenant également un coussinet élastique (17), dans lequel le coussinet élastique (17) est disposé au moins à une extrémité de l'élément de support (13) et qui est éloignée du corps de boucle (122).

8. Arceau selon la revendication 7, dans lequel une surface du coussinet élastique (17) et qui est éloignée du corps de boucle (122) est pourvue d'une structure antidérapante.

9. Arceau selon l'une quelconque des revendications 1 à 8, comprenant également au moins un élément de logement de sangle (18), chaque élément de logement de sangle (18) est pourvu de premiers trous traversants (181) et de deuxièmes trous traversants (182), les premiers trous traversants (181) et les deuxièmes trous traversants (182) sont disposés côte à côte, l'élément de logement de sangle (18) est disposé, à travers les premiers trous traversants (181), sur une partie de la sangle (11) et qui est configurée pour s'accrocher au corps de tige existant (100), et une partie de la sangle (11) et qui n'est pas configurée pour s'accrocher au corps de tige existant (100) est capable d'être disposée à travers les deuxièmes trous traversants (182).

10. Arceau selon la revendication 9, dans lequel une surface de l'élément de logement de sangle (18) et qui est configurée pour **s'adapter** au corps de tige existant (100) est pourvue d'une structure antidérapante.

11. Arceau selon l'une quelconque des revendications 1 à 10, dans lequel une épaisseur de la sangle (11) va de 0,2 mm à 0,4 mm.

12. Dispositif électronique, comprenant un corps de dispositif électronique (2) et l'arceau (1) selon l'une quelconque des revendications 1 à 11, dans lequel une base (21) du corps de dispositif électronique (2) est pourvue **d'un** troisième trou traversant (22), et le corps de dispositif électronique (2) est disposé sur la sangle (11) à travers le troisième trou traversant (22) .

13. Dispositif électronique selon la revendication 12, dans lequel le corps du dispositif électronique (2) est un routeur sans fil extérieur.
